# EUROPEAN PATENT SPECIFICATION

(11) **EP 4 298 574 B1**
(45) Date of publication and mention of the grant of the patent: **31.12.2025**
(21) Application number: 22760559.9
(22) Date of filing: 28.02.2022
(51) Int. Cl.: G06Q 10/08, G06Q 10/06, H04W 4/80, G01D 21/00, G01F 23/24, G01F 23/263, G06Q 10/087

(54) **SYSTEM OF PROVIDING AUTO-REPLENISHMENT FOR A CONSUMABLES CONTAINER**
SYSTEM UND ZUR BEREITSTELLUNG VON AUTOMATISCHER NACHFÜLLUNG FÜR EINEN VERBRAUCHSMATERIALBEHÄLTER
SYSTÈME DE FOURNITURE D'AUTORÉAPPROVISIONNEMENT POUR UN RÉCIPIENT DE PRODUITS CONSOMMABLES

(30) Priority: 26.02.2021 US 202163154171 P
(43) Date of publication of application: 03.01.2024
(73) Proprietor: Nypro Inc., Clinton, MA 01510 (US)
(72) Inventor: BELMONTES, Antonio, St. Petersburg, Florida 33716 (US); WILLIAMS, Amanda, St. Petersburg, Florida 33716 (US)
(74) Representative: Gulde & Partner
(86) International application number: PCT/US2022/018089
(87) International publication number: WO 2022/183095

(56) References cited:
- WO-A1-2019/189974
- US-A1- 2017 245 101
- US-A1- 2017 278 059
- US-A1- 2018 177 325
- US-A1- 2018 321 072
- US-A1- 2018 321 072
- US-A1- 2020 003 602
- US-A1- 2020 209 051
- WIKIPEDIA: "Bluetooth Low Energy", 25 February 2021 (2021-02-25), XP093177661, Retrieved from the Internet <URL:https://en.wikipedia.org/w/index.php?title=Bluetooth_Low_Energy&oldid=1008825349> [retrieved on 20240621]

## Description

### Field of the Disclosure

The disclosure relates generally to sensing of a consumables container, and, more particularly, to a system of level monitoring of, and providing autoreplenishment for, consumables containers.

### Background of the Disclosure

In the modern economy, certain consumable products may require a certain dosage to work properly, and rationing prior to replenishment is undesirable due to the likely failure of the product to work in the incorrect dosage. As such, it is highly desirable that such products be ordered online, and also be replenished upon consumption via online ordering and delivery.

Furthermore, it is well understood that various types of container contents are designed to be dispensed over extended time periods, such as in discrete doses. In general, as such contents are dispensed for consumption in the doses, there are no readily available tracking methodologies for the dispensing of those contents, and particularly for bulk contents, nor are there tracking methods to automatically indicate when more of the consumable is needed without the need to ration the consumable or to store extra packages of the consumable.

It is thus often the case that, for a user to monitor how much content remains in the container, the user must periodically shake, lift, or otherwise manipulate the container to allow for a qualified guess by the user as to how much content remains therein. Additionally, there is presently no active mechanism whereby a seller of containers having consumable contents can assess a consumer's need for additional contents.

Moreover, many products, such as those mentioned throughout, may be dispensed from durable or semi-durable dispensers, rather than directly from the container. However, there is presently no way for brands, retailers, or consumers to add level-sensing capabilities to these pre-existing "dumb" dispensers, and consumers may not want to purchase additional monitoring devices to monitor the levels of consumable in the "dumb" dispensers.

Therefore, the need exists for an apparatus, system, and method of monitoring content levels and of automatically indicating, such as to at least one of a consumer and/or a seller of the contents, when the need for additional consumable contents and/or for additional containers of the consumable arises.

US 2018/321072 A1 discloses a conventional auto-replenishment system for monitoring the level of a consumable in a container. US 2017/278059 A1 discloses a further auto-replenishment system for monitoring the level of a consumable in a container

### SUMMARY OF THE DISCLOSURE

The invention is defined by the appended set of claims. The description that follows is subjected to this limitation. Any disclosure lying outside the scope of said claims is only intended for illustrative as well as comparative purposes.

### BRIEF DESCRIPTION OF THE DRAWINGS

The disclosure is illustrated by way of example and not limitation in the accompanying drawings, in which like references indicate similar elements, and in which:
FIGs. 1A and 1B illustrate a front view and side view of a consumable and dispenser system;
FIG. 2 illustrates an exemplary electrical block for use with a dispenser;
FIG. 3 illustrates a dispensing of a consumable from a container;
FIG. 4 illustrates interaction of app with a backend rules engine;
FIG. 5 illustrates a block diagram of a hardware embodiment;
FIG. 6 illustrates a multi-layer app model; and
FIG. 7 illustrates interactions in the embodiments.

### DETAILED DESCRIPTION

The figures and descriptions provided herein may have been simplified to illustrate aspects that are relevant for a clear understanding of the herein described devices, systems, and methods, while eliminating, for the purpose of clarity, other aspects that may be found in typical similar devices, systems, and methods. Those of ordinary skill may recognize that other elements and/or operations may be desirable and/or necessary to implement the devices, systems, and methods described herein. But because such elements and operations are well known in the art, and because they do not facilitate a better understanding of the present disclosure, a discussion of such elements and operations may not be provided herein. However, the present disclosure is deemed to inherently include all such elements, variations, and modifications to the described aspects that would be known to those of ordinary skill in the art.

The terminology used herein is for the purpose of describing particular example embodiments only and is not intended to be limiting. As used herein, the singular forms "a", "an" and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on", "engaged to", "connected to" or "coupled to" another element or layer, it may be directly on, engaged, connected or coupled to the other element or layer, or intervening elements or layers may be present. In contrast, when an element is referred to as being "directly on," "directly engaged to", "directly connected to" or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc., may be used herein to describe various elements, components, regions, layers and/or sections, these elements, components, regions, layers and/or sections should not be limited by these terms. These terms may be only used to distinguish one element, component, region, layer or section from another element, component, region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the exemplary embodiments.

Processor-implemented modules, systems and methods of use are disclosed herein that may provide networked access to a plurality of types of digital content, including but not limited to video, image, text, audio, metadata, algorithms, interactive and document content, and which track, deliver, manipulate, transform and report the accessed content. Described embodiments of these modules, systems and methods are intended to be exemplary and not limiting. As such, it is contemplated that the herein described systems and methods may be adapted and may be extended to provide enhancements and/or additions to the exemplary modules, systems and methods described. The disclosure is thus intended to include all such extensions.

Furthermore, it will be understood that the terms "module" or "engine" as used herein do not limit the functionality to particular physical modules, but may include any number of tangibly-embodied software and/or hardware components having a transformative effect on at least a portion of a system. In general, a computer program product in accordance with one embodiment comprises a tangible computer usable medium (e.g., standard RAM, an optical disc, a USB drive, or the like) having computer-readable program code embodied therein, wherein the computer-readable program code is adapted to be executed by a processor (which may work in connection with an operating system) to implement one or more functions and methods as described below. In this regard, the program code may be implemented in any desired language, and may be implemented as machine code, assembly code, byte code, interpretable source code or the like (e.g., via C, C++, C#, Java, Actionscript, Objective-C, Javascript, CSS, XML, etc.).

Embodiments may include a content level monitoring apparatus, system, and method, as well as an auto replenishment apparatus, system, and method, for consumable contents, including consumable contents in a container and/or consumable contents dispensed by a durable or semi-durable dispenser from the container, for which monitoring of the level of such contents has not historically occurred. The embodiments may include a stand-alone durable dispenser/base, that is distinct from the one or more consumables, and which may include one or more printed circuit boards, firmware, network communication capabilities, user interfaces and indicators, provided power, and a dispenser output for dispensing content from a consumable associated with the dispenser.

The embodiments of the durable dispenser may be associated with one or more consumable containers or similar packages, such as may be formed of cardboard, plastic or glass, and which may have associated therewith one or more electronic labels having sensing, such as capacitive sensing, capabilities, and/or which may provide an aspect of sensing capabilities when in the consumables container is in the presence of the dispenser. The embodiments of the durable dispenser may extend upward into contact, in part or in whole, with one or more aspects of the container placed into the base, such that aspects of the container, such as sensing labels, are brought into contact with aspects of the dispensing base in order that the functionality discussed herein may be provided. Therefore, the container may have associated there with one or more aspects, such as electronic labels, to provide the functionality herein, either discretely or in conjunction with the encompassing and electronic aspects of the base, as described throughout. Of course, in some embodiments the consumable container may provide durability and/or functionality akin to a semi-permanent durable dispenser.

In short, as used herein, the disclosed systems and methods may include one or two aspects, as discussed throughout. More particularly, the first aspect may be the "consumable", such as the solids and liquids containers discussed herein, which may include a disposable good comprised of a package which includes therein a solid or liquid for consumption. The consumable container may be rigid or flexible, and may be or include, by way of non-limiting example, a bottle, cartridge, bag, jar (such as with a closure), a disposable dispenser, a box (such as may be formed of cardboard), a sealed or re-sealable package, or the like. The consumable may have associated therewith an aspect of a sensor, such as a label. The label may be associated during manufacture, during delivery, by a retailer, or by a consumer, by way of example. Alternatively, all sensing may be provided by the durable dispensing base.

The consumables container may be of any color or composition, such as may allow for the conductive sensing discussed herein. The consumable may have associated therewith printed strips or sensors that may extend substantially along the length/height of the consumable to allow for sensing, such as capacitive or photoresistive sensing, by way of non-limiting example. The strips may be also pressure sensitive and/or adhesive, and may be applied aftermarket or during the manufacturing and labeling process. These strips may electrically associate with electrodes in the dispenser in order to provide a signal or signals indicative of the requisite contents level sensing.

As noted, the durable dispensing unit discussed throughout may be physically and/or communicatively associated with the consumable. The durable may, as is also referenced throughout, include communication capabilities. Unlike the consumable, the durable aspect may have a usable life that spans the exhaustion of a plurality of consumables, such as over a predetermined time period, such as over the course of a month, a year, or the like.

The durable may include a dispenser for the dispensing of the consumable contents from a consumable container received into the dispenser. The dispenser may be, by way of non-limiting example, plastic in composition, and may be substantially injection molded, such as with one or more actuation elements, such as a handle, switch, crank, button, or the like. The dispenser may include the aforementioned electrodes for associating with the sensor strips on the label physically present on the consumable associated with the dispenser. The dispenser may include one or more printed circuit boards having a connector to the electrodes suitable for receiving signals from the sensors on the consumable label; a sensor module; one or more indicator LEDs to indicate dosage, level and/or auto replenishment; one or more network communication capable modules, such as for communicating with a smart phone, local area network, cellular network, or the like; one or more power modules to provide power to the dispenser modules and the consumable sensor circuit, and which may include batteries that may be permanent/semipermanent (i.e., rechargeable) or replaceable; and or other optional elements, such as one or more audio alarms to support or replace the LED indicators of correct dosage or auto replenishment.

Further included in the embodiments may be: cloud based storage in communication with one or more of the dispensers; one or more smartphone apps for communication with the one or more dispensers and/or the cloud based communication site; and an analytics dashboard, which may be app and/or web-based, such as may be used by a consumer as well as a seller of the solid or liquid contents and/or the containers thereof. As used herein, the "liquid level", "solids level", or "contents level" monitored in the disclosed apparatuses, systems and methods is indicative of the amount of contents remaining in a consumable container associated with aspects of the embodiments; a "dose" is an amount of contents properly dispensed, such as from the liquid output/spigot/crank, for a given purpose; and an "auto replenishment" may occur when the contents level in the consumable container reaches a point at which a reorder is required.

More particularly, a microprocessor, and the requisite processing power, to process sensor data from which insights into contents may be gained may be resident in the durable dispenser. Because the sensing, such as the capacitive sensing, must sense content levels inside a consumable container, the consumable container may have associated therewith, either aftermarket or following manufacture, and such as by direct printing, manual attachment, or in-label, a smart label having the aforementioned sensing, such as conductive or photosensitive strips or connective discrete sensors, running substantially up the consumable on at least one side, top or bottom thereof. These conductive strips may become communicative with the sensing system upon, and only upon, installation of the consumable container into the durable dispenser, or without association of the consumable container with the dispenser in some embodiments.

One or more of the microprocessors may be included within the durable, which may additionally include the network communications chipset and/or the sensing chipset/module. Also included within the dispenser may be power for the foregoing, such as one or more replaceable batteries, such as coin batteries, AA batteries, or AAA batteries, by way of non-limiting example.

Further included may be firmware and software associated with the microprocessor to provide the functionality discussed throughout. For example, firmware may sense the contents level based on the intercommunication of the sensing chip and the conductive strips, and may use this information to indicate dosing or auto replenishment. Likewise, dosing, and perhaps auto replenishment, may be information provided remotely from cloud-based algorithms to the firmware of the dispenser.

Of course, the key electro-mechanical functionality provided in the embodiments includes detection of the contents level within the consumable. This may be done using the aforementioned sensing, such as via electrodes in the durable dispenser associated with a sensor, such as a flexible and/or printed circuit on the consumable, in communication with content sensing algorithms in the software and/or firmware discussed throughout. Likewise, a variety of sensing algorithms may be variably associated with a variety of consumables and/or durable dispensers, as discussed throughout.

As such, the firmware and software, using or absent intercommunication with the cloud or in association with cloud communication, may indicate and/or otherwise trigger an autoreplenishment event. This auto replenishment may be automatic or semi-automatic--a semi-automatic autoreplenishment event may show a confirmation dialogue or other alert to the user, such as in the app, which may allow for the user to cancel or confirm the order; or, the auto replenishment order may be fully automated. An autoreplenishment event may be communicated to the referenced cloud backend, such as subject to an additional confirmation, such as by an app alert or an email, to the ordering consumer. Further, such an auto replenishment event may contribute to the data that may be provided to a brand, such as on the brand dashboard. Data associated with an autoreplenishment may include date, time, location, and/or user ID of the app associated with the auto replenishment, percent content level (which may be automatic as an autoreplenishment threshold, or which may be set by the user), product SKU, or the like.

To provide this autoreplenishment, a user app with a graphical user interface (GUI) may include various specific aspects, and may necessarily provide certain specific data. For example, the smart phone at may be enabled to discover and pair with the firmware of the dispenser, such as when the dispenser is activated or on, as mentioned above. The smart phone app may display autoreplenishment requests or confirmation, such as in a user dialogue format. Further, the smart phone app may display a current level, and the frequency of updates for the level. Also indicated may be proper dosing and the ability for the user to request dosing.

The app may additionally include the capability to receive discounts and targeted advertising, such as from the brand dashboard. These may be in the form of a push notification or a user dialogue that provides an app alert to accept and/or apply the discount code, such as wherein the discount code may be saved for the next order or applied to a current order. Of course, the app may include the ability to change any one or more of the foregoing settings or any additional settings, such as autoreplenishment settings, such as wherein the content level percentage threshold may be varied for an autoreplenishment indication. The app may also allow for changes in dosage settings, machine type, such as washing machine brand and model, content dispensing models and machine types, and the receipt of or application of discount codes, and so on. The foregoing may be available from a drop-down or similar menu, a pop-up window, or via any known user interaction, by way of example.

The firmware and software aspects of certain of the embodiments may thus include one or more variants of the afore-discussed content level sensing algorithms, such as may depend on the provided sensor suite in each embodiment. Further, the level sensing may include interference avoidance techniques to maintain sensing accuracy, such even if a user touches the conduct of strips of the label or the dispenser. Further included within the firmware may be the ability to define and communicate this level sensing. For example, network communications, such as BLE communications, may be included in, or otherwise controlled by, the firmware. As such, the dispenser and/or the label may be discoverable by a smart phone app, and pairing between the dispenser and the smartphone app may occur. Thereby, level-sensed updates may be communicated from the dispenser to the smart phone at appropriate or requested intervals.

Yet further, autoreplenishment indications to be generated from the firmware may comprise intelligence within the user app or within a cloud backend, as discussed further throughout. Accordingly, network communications may be triggered by changes in content level (such as continuously or periodically), the need for auto replenishment, or the like, and hence communications may occur on fixed time intervals, continuously, or at intervals of variable frequency.

The disclosed network communication capabilities may include communication, such as through the dispenser or directly from an active or passive (such as via an active "ringing" from a smartphone or like-reader) label, with one or more smartphone apps having user information associated therewith, and which may receive user feedback regarding content levels, dosing, auto replenishments, and so on. Such a smart phone app may communicate with the label or dispenser via, for example, WiFi, Bluetooth, BLE, or cellular communication methodologies, and further, the firmware of the dispenser may be suitable to batch information and data and/or otherwise piggyback to a smart phone having resident thereon the referenced app.

Needless to say, a snug electromechanical connection with the dispenser may be provided for the consumable container, and/or for variably sized consumables, via any known method. This connection may occur only upon insertion of the consumable container into the dispenser, such as by a spring-loaded connector that snugs around the consumable container, a pop-open "box-top" capable of opening to receive the consumable container, and/or by using a keying mechanism, such as a slot, associated with the consumable to ensure insertion of the consumable at a proper orientation into the dispenser to allow for an electromechanical connection, or using other like methods, by way of example.

Of additional note, the embodiments may provide a sensing solution that only "wakes up" when the consumable is plugged into the durable permanent or semi-permanent dispenser. Moreover, the embodiments allow for enhanced convenience and control by the user, such as by communicatively associating with the durable's circuitry referenced herein, at least once it "wakes up", of one or more apps having resident therein settings that may be adjusted by a user, such as for dosing and/or level monitoring of the contents within the consumable.

Further, the communication capabilities disclosed herein may allow for enhanced value to sellers, such as by increasing brand loyalty, reorder frequency, and by providing experiential use data, by way of non-limiting example. In turn, it will be understood in light of the disclosed embodiments that the value to a user may be further enhanced, such as by providing for the offering of discounts from a brand monitoring usage levels to a high-volume user, a user that complies with dosing or maintenance suggestions, or the like.

Further, a cloud-based backend may store and serve received data to and from the aforementioned app, and to or from one or more web-based or app-based dashboards. Some or all of the additional processing discussed throughout may be performed at the cloud based backend, such as alerts or email confirmations in the circumstances of auto replenishment, such as instead of drawing on the limited resources of the dispenser's firmware or processors.

The dashboard may be associated with one or more sellers or brands of the referenced contents within the consumable. In such circumstances, an analytics dashboard may be available to the brand for user and use data indicative of certain geography use, global use, use at times of the day, use by demographic area, or the like. This and additional information provided at the dashboard may allow for a brand to target or otherwise send special offers, discount codes, or the like to particular users, such as high-volume users. Likewise, the consumer may be provided with a similar in-app "dashboard".

Additional functional requirements of the cloud based backend may include storing and/or calculating data, including autoreplenishment events, dosing events, and content level events, by way of example, and may serve that data back to the smart phone app and/or to the dashboard as needed. Further, certain of the decision-making algorithms discussed herein throughout may also reside at the cloud based backend, such as rather than residing in a smart phone app or in association with the dashboard.

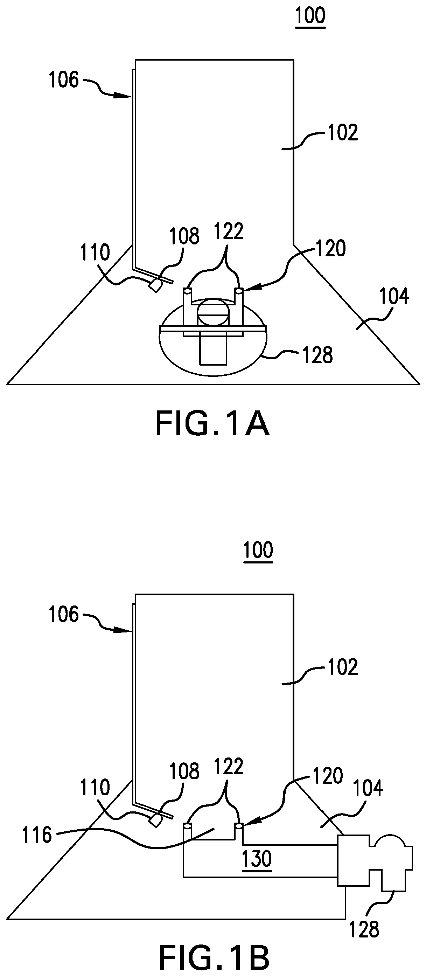

Figures 1A and 1B illustrate front and side views, respectively, of a system 100 in which a consumable 102 is associated with a dispenser 104 according to the embodiments. As illustrated, a sensing label 106 may be associated with one side of the consumable along its length, and may terminate in an electrical "tab" 108 that, upon association of the consumable 102 with the dispenser 104, electrically connects to an electrical contact 110 in the permanent dispenser. The electrical contact shown may be at a single or multiple positions within the dispenser, such that the need may or may not exist to align the conductive strips 106 with the electrical contact 110 upon insertion of the consumable 102 in order to complete the sensing circuit.

Also as shown, the neck and/or cap portion 116 of the consumable 102 may pass through a seal 120 upon association with the dispenser 104, such that liquid within the consumable cannot spill out and overflow the sides of the receiving portion of the dispenser. The seal 120 may take the form of an o-ring within the dispenser receiving portion, by way of non-limiting example. Further illustrated in Figures 1 is a mechanical adjustment 122, such as a spring-loaded orifice, that may snug the neck of the consumable, once inserted through the leak seal 120, into the dispenser 104, such as to further prevent leaks and provide support to hold up the consumable 102.

Also illustrated in association with the dispenser is an output 128, such as a spigot. Of note, the spigot shown is in communication with a pathway 130 that begins on the side of the o-ring 120 opposite the body of the consumable 102, and that terminates on the input side of the spigot. Of note and as will be evident from the illustration of Figures 1, the gravitational pull may provide sufficient downward force/head pressure so that the contents enter the pathway for output at the spigot.

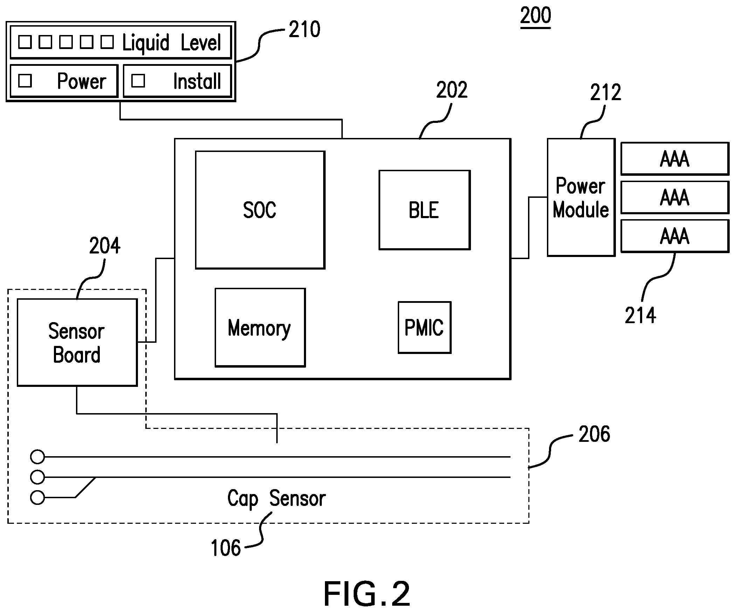

Figure 2 illustrates an exemplary "electrical block" 200 that may be included in association with the aforementioned dispenser 104 (or with the consumable in the embodiment, referenced above, in which the consumable is semi-permanent and provides the functions herein ascribed to the durable dispenser; such an instance might include a lotion of=r shampoo pump container, for example). Within the electrical block are illustrated a main printed circuit board 202, which may include, by way of nonlimiting example, processing, memory, and/or network communication capabilities; a sensor board 204 that may electrically associate with the conductive strips 106 of the consumable label to form a capacitive or like- sensing circuit 206; a display module 210, whereby liquid levels, power, or the replenishment, or the like may be indicated to the user; and a power module 212 that powers the electrical block and which may have associated therewith one or more batteries 214. Of note, firmware, running in association with the main printed circuit board 202 and/or with the display module 210 may apply one or more algorithms to use the available indicators, such as the LED lights and/or audio indicators, in different manners in order to indicate different functionality, such as varying lighting, beeps, or the like to indicate different states of the liquid levels and/or dosing to a user.

In accordance with the foregoing, the sensor output may be active or passive, as discussed. In either case, the output of the sensor must be provided to a processing system 1110. This may be done by any of a variety of methods. For example, a highly simplistic processor may be included in the durable dispenser in association with the sensor. In such cases, the processor may include some wireless communication capabilities, such as RF, infrared, Bluetooth, Wi Fi, or the like, or communication with the processing chip may occur based on an active external interrogation, such as by the sensor, of the processing chip. Alternatively, the one or more processors may be remote from the container and/or the durable as discussed throughout, and hence may form part of a system that actively interrogates the container/dispenser to obtain the requisite sensing output, as is also discussed further hereinbelow.

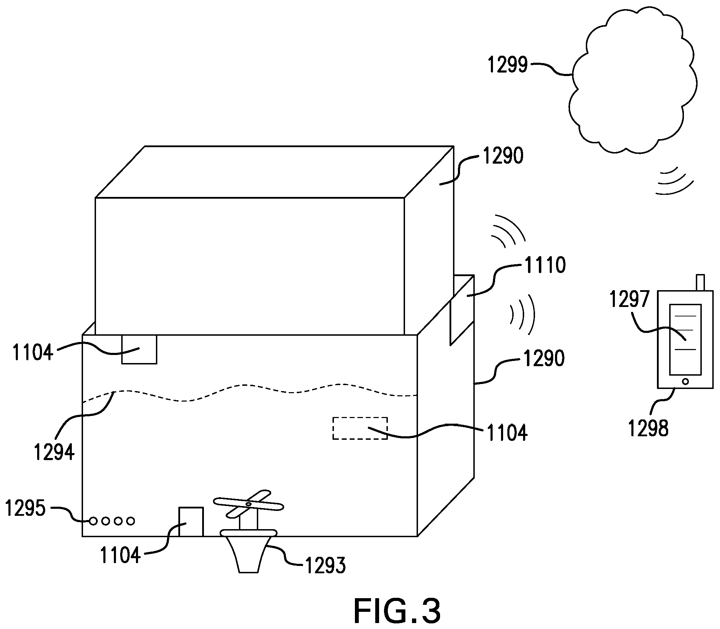

Figure 3 illustrates an embodiment in which either a container 1290 is placed into a dispensing base unit 1292, or the contents 1294 to be sensed are dispensed into a container physically associated with a dispensing unit (or circumstances in which the consumable container is semi-permanent and serves the function of a durable dispenser). As such, the durable dispensing unit may include a container, or may encompass a container placed therein, in whole or in part.

In the embodiment of Figure 3, the sensing capabilities may be provided on the dispensing unit. Additionally and alternatively, the sensing may be wholly or partly provided in association with the container, such as wherein the sides of the dispensing unit rise a substantial amount up to encompass a container placed therein and allow association of sensing capabilities partly within the dispensing unit with a container placed therein. As is the case with the embodiment of Figure 3, after processing the sensed information may be wired or wirelessly communicated to one or more information processing systems, such as telephonic or desktop applications and/or the apps discussed throughout, which are suitable to convey information regarding the need to replenish, or the general state of dispensing of, the solids or liquids associated with the container. This communication may occur directly with a proximate device 1298, or may occur remotely, such as via the internet, cloud communications, the cellular network, or the like.

As referenced throughout, the type of sensing used, and/or the propriety of the use of different types of sensing, may vary with the uniformity of the consumable, the consumables container, and/or the bulk solids within a container. Needless to say, the foregoing may also vary with the size and shape of a container, such as the size of the container placed into a dispenser, and they also vary as to the most suitable location for sensing. By way of non-limiting example, the dispenser in the embodiment of Figure 3 may include the most suitable sensing location within the dose dispenser associated with the dispensing unit. Similarly, different types of sensing may be used or otherwise activated by the dispenser and/or the processor associated with the dispenser, such as based on the characteristics of a consumables container or a bulk solid placed within the dispensing unit.

Further included may be firmware and software to provide the functionality discussed throughout. For example, firmware may sense the solids level based on the intercommunication of the sensing and the processing, and may use this information to indicate dosing or auto replenishment. Likewise, dosing and/or auto replenishment may be information provided remotely from cloud-based algorithms, such as to the firmware of the durable dispensing base.

More particularly and as referenced throughout, the disclosed communication capabilities may include communication with one or more smartphone apps 1297 having user information associated therewith, and which may receive user feedback regarding levels, dosing, auto replenishments, and so on. Such a smart phone app may communicate with the durable dispensing base via, for example, WiFi, Bluetooth, BLE, or cellular communication methodologies, and further, the firmware of the base may be suitable to batch information and data and/or otherwise piggyback to a smart phone having resident thereon the referenced app.

Further, a cloud-based backend 1299 may store and serve received data to and from the aforementioned app, and to or from one or more web-based or app-based dashboards. Some or all of the additional processing discussed throughout may be performed at the cloud based backend, such as alerts or email confirmations in the circumstances of auto replenishment, such as instead of drawing on the limited resources of the dispensing base's firmware or processors.

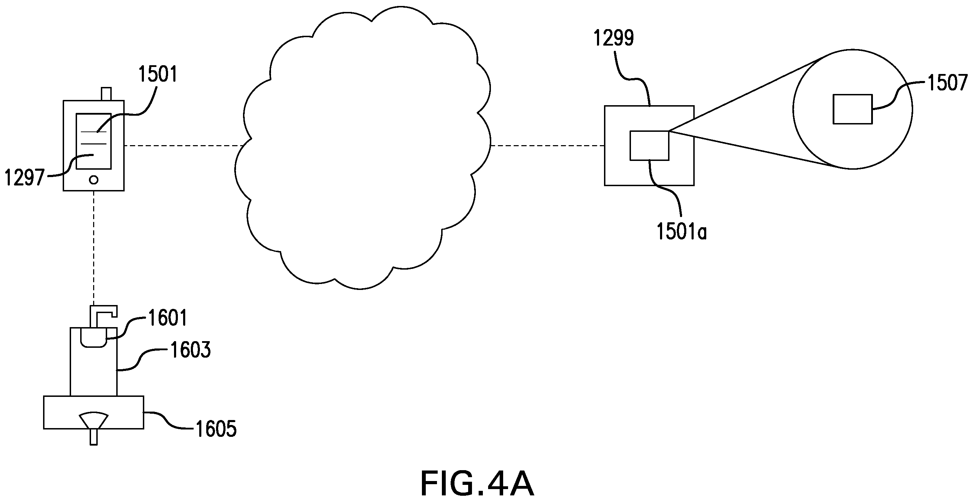

In relation to continuing efforts to provide enhanced consumer convenience and personalization, such as through the use of the aforementioned app 1297, particularly for customers to order products online, enhanced insight provided by consumption tracking algorithms and data mining algorithms regarding product use is essential. These may form part of a rules engine 1507 at backend 1299, as illustrated in Figure 4A.

More particularly, auto replenishment, such as including but not limited to auto replenishment for products ordered online, may be enabled by localized product used tracking data and rules 1507, both in relation to an individual consumer and her specific orders, and across many consumers, such as many consumers who may share common characteristics. For example, common characteristics may include manager of the household, purchaser for the household, principal household breadwinner, product type (i.e., food, beverage, cleaning products, etc.), household income level, geographic location, and so on. More particularly, data mining algorithms forming part of rules engine 1507 regarding consumption habits for particular products, verticals, and the like may be essential to optimize the convenience and quality of auto replenishment such as may be "opted into" in the app 1297.

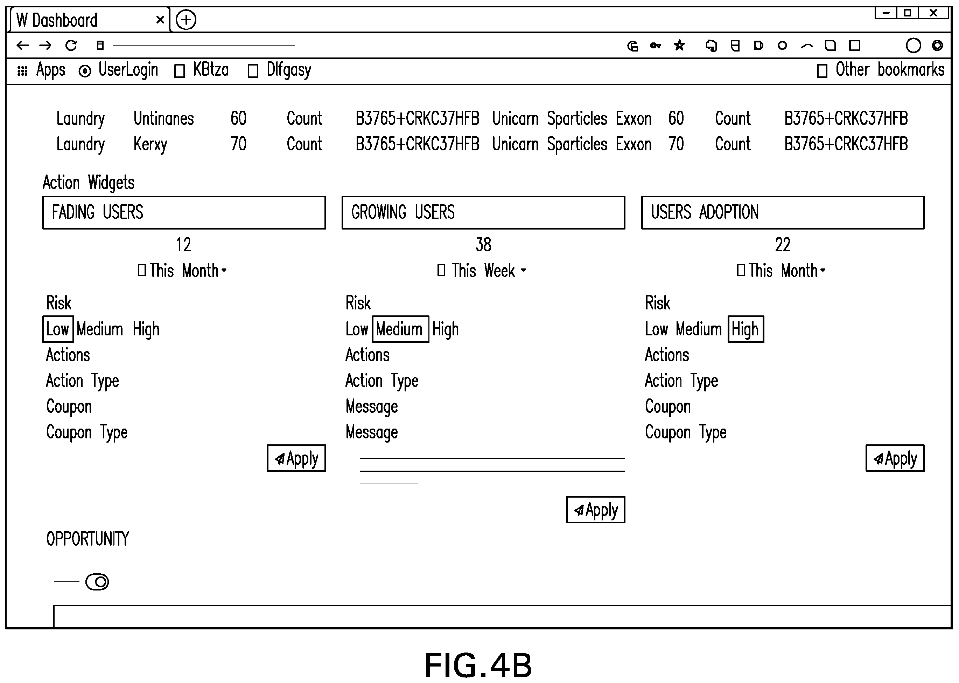

The aforementioned product use data may, of course, be provided locally in association with the product itself, as discussed throughout, i.e., in association with sensing on or partly on a consumable container, or associated with the durable dispenser from which the consumable product is dispensed. Moreover, a consumable's sensor output and/or a durable's sensor output may be associated with a brand dashboard 1501a (see Figure 4B), which brand dashboard 1501a may provide information to a consumer local to the dispensing of the product, and which may provide, such as anonymously or otherwise, particular data regarding product use directly to a brand or a manufacturer.

Such a brand dashboard 1501a may include and/or be part of a convenient, graphical user interface (GUI), which may display critical metrics regarding product use, churn rate, and the like, and which may enable software and firmware updates to be locally downloaded to the consumer side and/or to the brand provider side. Similar critical metrics may be assessed using the brand dashboard rule set and GUI 1501, 1501a, such as product use across multiple customers, averaged churn rates, brand stickiness (i.e., when a consumer makes a particular purpose purchase in a certain vertical, how often does the consumer purchase that particular brand), and enabling firmware and software uploads and/or direct outreach to some consumers meeting certain criteria, or to all consumers, by way of non-limiting example.

In accordance with the foregoing, certain features may be provided in association with either the consumable or the durable. For example, time of flight sensing may be provided in order to sense certain product usages, such as container openings, dispensing of solids or liquids, and the like. Moreover, capacitance touch sensing may additionally be included, such as to detect touch and/or discern the significance of a touch, such as discerning a push from an errant bump.

Each of the foregoing sensing types may be communicative with one or more local devices and/or network hubs, such as using on-chip Wi-Fi, Bluetooth, BLE, or the like wireless communication methodologies embedded in the durable dispenser. Needless to say, the embodiments may be power aware, at least such that battery-powered may be consumed only during operation so as to conserve power, and software and firmware may include capabilities to disable components when not used in particular states, such as disabling certain sensors at certain times, including secondary sensors to enable knowledge of proper timing to turn on other sensors (i.e., the use of proximity sensors to "wake-up" time of flight or capacity of touch sensors) and so on. This variable control of sensors 1601 input and output data and/or timing, whether on durable 1603 or on consumable container 1605, may occur pursuant to output of the rules engine 1507.

Further, to the extent the disclosed aspects are embedded in the durable component, the durable may optionally be provided with a plug in capability for use with a wall outlet. Plug in capability may or may not include the use of battery-powered as a backup to AC outlet power.

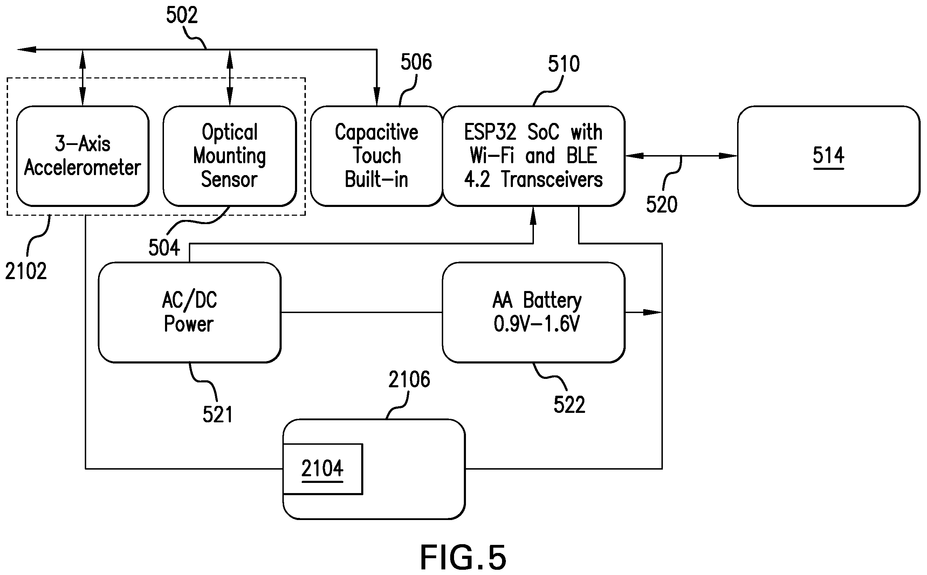

Figure 5 illustrates a block diagram of exemplary hardware for use in the embodiments. As shown, multiple sensors 502, such as an accelerometer and/or other gyroscope, optical sensing (such as time of flight sensing) 504, and capacitance touch sensing 506 may be provided in a single or multiple sensor suites/modules 2102. These sensors 502, 504, 506 may be in communication with one or more transceivers 510, as shown, which may communicate wirelessly with one or more local devices 512 and/or with one or more remote backends 514 over, for example, a wireless network 520.

The sensor module 2102 may be associated, for example, with an actuator 2104 that dispenses the consumable from the dispenser/consumable container 2106. The actuator 2104 may be, for example, a pump or a spigot.

Also illustratively shown is battery-power 522 provided to the disclosed sensors and transceiver(s), although the skilled artisan will appreciate that AC or DC converted outlet power 521 may similarly be employed with the embodiments. Yet further, the embodiments may include an ability to interface with the disclosed hardware by means other than download or upload over the network 520, such as by providing ports enabled to receive, for example, USB storage devices or the like.

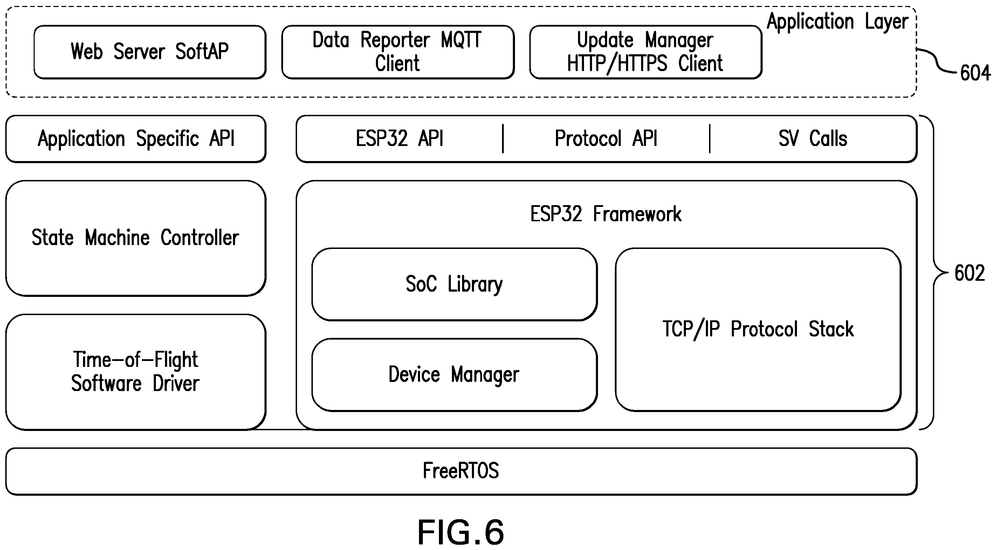

The foregoing may interact as between hardware, and may make firmware and software -centric decisions, using a multilayer operating model. For example, and as shown in Figure 6, one or more application layers 604 may allow for the interaction of certain software and firmware modules, and for decision-making therefrom, to cause certain actions to occur, such as data tracking, data mining, statistical analyses, auto replenishment, the transceiving of software updates or error messages, the interaction between a consumable or a durable and a local GUI, or a remote server and GUI, and the so on.

The interaction of the operational layers through the provided applications, or "apps", may be pursuant to the control of a control layer 602, such as may provide application programming interfaces (API's), controllers, hardware and software drivers, and the like. As is also illustrated in Figure 6, this control layer 602 may include communication protocols and device managers for network interactive hardware, APIs for particular apps, oversight control, control and drivers for the disclosed sensors, and so on, by way of nonlimiting example.

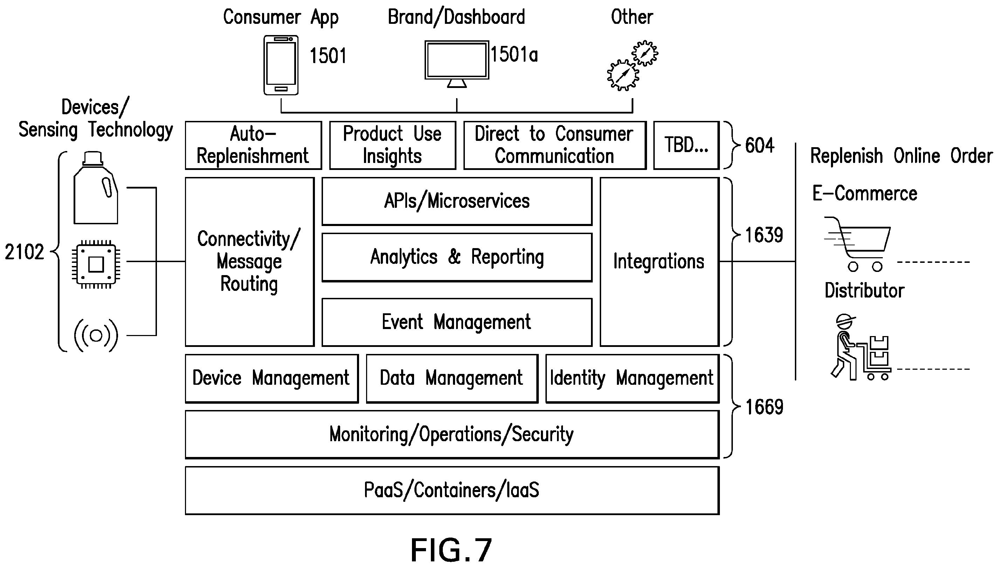

Figure 7 illustrates the interactions and decision-making that may occur via the application layer 604 discussed above with respect to Figure 6. For example, a plurality of applications may allow for a variety of decision-making to occur with regard to product consumption, and may additionally enable application specific data mining and communications with particular hardware 1639. For example, activity and messages may be received from the various devices and sensors discussed throughout. Applications may uniquely manage and allow for modification of the behavior of these distant devices and sensors.

The unique data provided by these sensors pursuant to these controls may then enable a variety of secondary analyses and decision-making. For example, particular services, such as auto replenishment upon sensing a particular threshold, may be provided by the one or more applications. Such applications, and/or the services provided thereby, may be correspondent to one or more brands.

Further, provided may be analytics and reporting capability, such as whereby product usage is discerned over time. Yet further, certain events may be monitored and managed 1669, such as including triggers for particular events. By way of example, a sensor indicating a trigger level has been reached may trigger an auto replenishment order being placed to a Google home device immediately upon the sensing of the empty container (such as pursuant to a pre-existing permission in the mobile device app from a user to make that auto replenishment order).

As such, a variety of applications, capabilities, insights, analyses, and so on, may be integrated in the embodiments to provide for unique capabilities and insights to brands, points of sale, manufacturers, distributors at all geographic levels, and the like. Needless to say, for both the consumer and the brands, the aforementioned GUI may be provided to interact with the disclosed aspects in order to enable features of the embodiments discussed throughout.

Of course, certain features not particularly discussed herein may be enabled through the use of the disclosed exemplary embodiments. For example, app or device behavior may be remotely modified. Furthermore, both executable events and passive events may be tracked through the use of the embodiments. Yet further, automated and manual messaging may be provided in the embodiments. And still further, ones of the embodiments may be based upon received or sent feedback, such as may be gained from consumers through app usage, in order to improve performance of certain executable actions, such as auto replenishments.

More particularly in relation to the aforementioned sensors, certain sensors may provide independent data, and additionally multiple sensors may have the data therefrom corresponded, such as in the one or more apps disclosed herein and/or the rules engine thereof, to provide different information than is provided by the sensors independently. According to the invention, a capacitance touch sensor and an accelerometer sensor may, in combination, provide enhanced sensing in relation to a pump product, such as a soap, lotion, shampoo, hair conditioner, or the like.

More particularly, the capacitance touch sensing may provide an indication that a touch is intentional and of an affirmative pump actuation, and an accelerometer may provide information regarding how hard the pump did/must occur, and/or how many pumps must occur, to allow for dispensing of a usable amount, or dose, of pumped product. It will be appreciated by the skilled artisan that product may require more aggressive pumping, or more repeated pumping, upon the end of the life cycle of a product container.

Of course, other sensors, such as optical and/or weight sensors, may be employed to supplement the disclosed sensors. Such sensors may, for example, provide dosing information, and amounts remaining, for example. This may similarly be the case for other types of sensing combinations, such as capacitance touch sensing and weight sensing (wherein weight may indicate the amount of product remaining), weight sensing plus accelerometer and/or gyroscopic sensing, and so on.

Simply put, and with reference now additionally and again to Figure 5, the sensors may be associated with the pump/actuator 2104, such as in a modular sensor package 2102. This sensor module 2102 may be placed in physical association with the actuator positionally suitable to perform the disclosed sensing, as discussed throughout. For example, the module 2102 may be placed under a pump actuator.

Additionally and alternatively, the embodiments may provide power in a more efficient manner than is presently known any art of durable dispensers or consumables. By way of example, BLE is considered herein as a low-power consumption methodology of providing sensor communications from the consumable container or the durable dispenser to the disclosed GUI. However, BLE is typically tethered to the actuation of an app on a mobile device--that is, actuation of the BLE may typically necessitate that a user open an app before the BLE communications are actuated. As such, an app may be associated with, for example, a hub receiver 702 that receives continuous power, such as a secondary device distinct from the consumable or durable discussed herein. Such a hub device may be an Amazon Echo, a Google Home, or the like, and the app resident on the secondary hub device may periodically ping the BLE element, or may itself provide the BLE element, such that the BLE element is subjected to a continuously powered and continuously opened app that does not necessitate an affirmative app opening by user. Of course, in such circumstances, several of the disclosed consumables and/or durables may thus communicate with the BLE/BLE app on a single nearby hub device using the disclosed wireless methodologies.

In accordance with the operational environment, certain aspects of the embodiments, such as the providing of power, may be maintained separately from the consumable. This may be particularly effective in cases where the consumable comprises a pump that dispenses a liquid. More specifically, dispensers for soap, lotion, shampoo, hair conditioner, and the like may necessarily have use-circumstances in which elements within the physical zone of the pump, such as the water that may generally be used with such products, may cause corrosion and decay of aspects of the pump. Therefore, while certain sensors may nevertheless be associated with the pump but may be environmentally protected as will be appreciated by the skilled artisan, certain other features, such as wireless communication and power, may be secondarily associated with the pump or the durable.

By way of example, fully enclosed rechargeable batteries, such as clean cell batteries, may allow for exceedingly small footprints of physical aspects of the embodiments of its while nevertheless allowing for readily provided power. That is, an inductive charging base may be readily associated with the pump or the durable to allow for recharging of such an embedded battery, but that base, which may itself be associated with A/C outlet power, such as either directly or by DC conversion, may be outside of an environment in which electrical shock or corrosion may occur.

In the foregoing Detailed Description, it can be seen that various features are grouped together in a single embodiment for the purpose of streamlining the disclosure. This method of disclosure is not to be interpreted as reflecting an intention that the embodiments require more features than are expressly recited herein.

## Claims

1. An auto-replenishment system for monitoring the level of a consumable (1294) in a container (1290), comprising:
a dispenser (1292) capable of physical association with the container (1290);
a plurality of electrical conductors (106) forming a sensing module (206) associated at least with the dispenser (1292), the sensing module (206) having associated therewith firmware configured to convert signals associated with the electrical conductors (106) to an indication of the level of the consumable (1294) in the container (1290);
a communications module (1110) configured to communicate the level to at least a user mobile device (1298) over at least one network; and
a BLE power module (212) being physically distinct from the sensing module (206), which is configured to at least periodically power up the sensing module (206) and the communications module (1110) absent actuation of an app (1297) on the user mobile device (1298);
**characterized in that** the sensing module (206) comprises a capacitance touch sensor and an accelerometer sensor.

2. The system of claim 1, further comprising an auto-replenishment of the container (1290) responsive to the indication to do so from the app (1297).

3. The system of claim 1, wherein the auto-replenishment includes an opt-in in the app (1297).

4. The system of claim 1, wherein the indication is provided to the app (1297) to enable a manual replenishment of the container (1290).

5. The system of claim 1, further comprising a backend that monitors the indication from the sensing module (206) to assess a need for autoreplenishment.

6. The system of claim 5, wherein the autoreplenishment comprises an online order.

7. The system of claim 5, wherein the backend comprises a rules engine and/or a monitor for a plurality of the containers (1290).

8. The system of claim 1, wherein the app (1297) comprises a brand dashboard or a graphical user interface.

9. The system of claim 1, wherein the at least one network comprises one of Wi-Fi, Bluetooth, BLE, and cellular.

10. The system of claim 1, wherein the BLE power module (212) additionally provides power awareness.

11. The system of claim 1, wherein the app (1297) is subject to a controls layer of software that further comprises at least an application programming interface, API, hardware and software drivers, and hardware and software communication protocols.

12. The system of claim 1, wherein the app (1297) comprises modifiable triggers based on the sensing module (206).

13. The system of claim 1, wherein the BLE power module (212) comprises rechargeable batteries.

14. The system of claim 1, wherein the dispenser (1292) is a pump top, and the container (1290) is a lotion bottle.

## Patentansprüche

1. Automatisches Nachfüllsystem zur Überwachung des Füllstands eines Verbrauchsmaterials (1294) in einem Behälter (1290), umfassend:
einen Spender (1292), der physisch mit dem Behälter (1290) assoziiert werden kann;
mehrere elektrische Leiter (106), die ein Sensormodul (206) bilden, das zumindest mit dem Spender (1292) assoziiert ist, wobei das Sensormodul (206) mit einer Firmware assoziiert ist, die dazu konfiguriert ist, Signale, die mit den elektrischen Leitern (106) assoziiert sind, in eine Angabe des Füllstands des Verbrauchsmaterials (1294) im Behälter (1290) umzuwandeln;
ein Kommunikationsmodul (1110), das dazu konfiguriert ist, den Füllstand über mindestens ein Netzwerk an mindestens ein mobiles Benutzergerät (1298) zu übermitteln; und
ein BLE-Leistungsmodul (212), das physisch vom Sensormodul (206) getrennt und dazu konfiguriert ist, das Sensormodul (206) und das Kommunikationsmodul (1110) zumindest periodisch einzuschalten, wenn keine App (1297) auf dem mobilen Benutzergerät (1298) betätigt wird;
**dadurch gekennzeichnet, dass** das Sensormodul (206) einen kapazitiven Berührungssensor und einen Beschleunigungssensor umfasst.

2. System nach Anspruch 1, umfassend ferner eine automatische Nachfüllung des Behälters (1290), die auf die entsprechende Anweisung der App (1297) reagiert.

3. System nach Anspruch 1, wobei die automatische Nachfüllung ein Opt-In in der App (1297) umfasst.

4. System nach Anspruch 1, wobei die Angabe der App (1297) bereitgestellt wird, um eine manuelle Nachfüllung des Behälters (1290) zu ermöglichen.

5. System nach Anspruch 1, umfassend ferner ein Backend, das die Angabe vom Sensormodul (206) überwacht, um einen Bedarf für eine automatische Nachfüllung zu bewerten.

6. System nach Anspruch 5, wobei die automatische Nachfüllung eine Online-Bestellung umfasst.

7. System nach Anspruch 5, wobei das Backend eine Regel-Engine und/oder einen Monitor für eine Vielzahl der Behälter (1290) umfasst.

8. System nach Anspruch 1, wobei die App (1297) ein Marken-Dashboard oder eine grafische Benutzerschnittstelle umfasst.

9. System nach Anspruch 1, wobei das mindestens eine Netzwerk eines von Wi-Fi, Bluetooth, BLE und Mobilfunk umfasst.

10. System nach Anspruch 1, wobei das BLE-Leistungsmodul (212) zusätzlich eine Leistungserkennung bereitstellt.

11. System nach Anspruch 1, wobei die App (1297) einer Steuerungsschicht der Software unterliegt, die ferner mindestens eine Anwendungsprogrammierschnittstelle (API), Hardware- und Softwaretreiber sowie Hardware- und Softwarekommunikationsprotokolle umfasst.

12. System nach Anspruch 1, wobei die App (1297) modifizierbare Auslöser auf der Grundlage des Sensormoduls (206) umfasst.

13. System nach Anspruch 1, wobei das BLE-Leistungsmodul (212) wiederaufladbare Batterien umfasst.

14. System nach Anspruch 1, wobei der Spender (1292) ein Pumpenoberteil und der Behälter (1290) eine Lotionsflasche ist.

## Revendications

1. Système d'auto-réapprovisionnement pour surveiller un niveau d'un consommable (1294) dans un réservoir (1290), comprenant :
un distributeur (1292) permettant une association physique avec le réservoir (1290) ;
une pluralité de conducteurs électriques (106) formant un module de détection (206) associé au moins au distributeur (1292), le module de détection (206) comportant un firmware associé à celui-lui et configuré pour convertir des signaux associés aux conducteurs électriques (106) en indication du niveau du consommable (1294) dans le réservoir (1290) ;
un module de communication (1110) configuré pour communiquer le niveau à au moins un dispositif mobile utilisateur (1298) à travers au moins un réseau ; et
un module d'alimentation BLE (212) étant physiquement distinct du module de détection (206), qui est configuré pour alimenter au moins périodiquement le module de détection (206) et le module de communication (1110) en l'absence d'activation d'une application (1297) sur le dispositif mobile utilisateur (1298) ;
**caractérisé en ce que** le module de détection (206) comprend un capteur tactile capacitif et un capteur accéléromètre.

2. Système selon la revendication 1, comprenant en outre un réapprovisionnement automatique du réservoir (1290) en réponse à l'indication à exécuter depuis l'application (1297).

3. Système selon la revendication 1, dans lequel le réapprovisionnement automatique comprend une participation volontaire dans l'application (1297).

4. Système selon la revendication 1, dans lequel l'indication est fournie à l'application (1297) pour permettre un réapprovisionnement manuel du réservoir (1290).

5. Système selon la revendication 1, comprenant en outre un plan arrière qui surveille l'indication provenant du module de détection (206) afin d'évaluer une nécessité d'un réapprovisionnement automatique.

6. Système selon la revendication 5, dans lequel le réapprovisionnement automatique comprend une commande en ligne.

7. Système selon la revendication 5, dans lequel le plan arrière comprend un moteur de règles et/ou un dispositif de surveillance pour une pluralité de réservoirs (1290).

8. Système selon la revendication 1, dans lequel l'application (1297) comprend un tableau de bord de marques ou une interface utilisateur graphique.

9. Système selon la revendication 1, dans lequel au moins un réseau comprend l'un parmi un Wi-Fi, un Bluetooth, un BLE et une cellulaire.

10. Système selon la revendication 1, dans lequel le module d'alimentation BLE (212) fournit également une sensibilisation à puissance.

11. Système selon la revendication 1, dans lequel l'application (1297) est soumise à une couche de contrôle d'un logiciel qui comprend en outre au moins une interface de programmation d'application, API, des pilotes matériels et logiciels, ainsi que des protocoles de communication matériels et logiciels.

12. Système selon la revendication 1, dans lequel l'application (1297) comprend des déclencheurs modifiables sur la base du module de détection (206).

13. Système selon la revendication 1, dans lequel le module d'alimentation BLE (212) comprend des batteries rechargeables.

14. Système selon la revendication 1, dans lequel le distributeur (1292) est un bouchon à pompe, et le réservoir (1290) est un flacon de lotion.
